# EUROPEAN PATENT APPLICATION

(11) **EP 2 288 134 A2**
(43) Date of publication of application: **23.02.2011**
(21) Application number: 10013082.2
(22) Date of filing: 29.08.2002
(51) Int. Cl.: H04N 1/32, H04N 1/00

(54) **Facsimile apparatus that can transfer image data received as an e-mail message to another facsimile apparatus**

(30) Priority: 31.08.2001 JP 2001263418; 05.08.2002 JP 2002227064
(62) Divisional of application: 02255996.7
(71) Applicant: Ricoh Company Ltd., Tokyo 143-8555 (JP)
(72) Inventor: Maemura, Kohichiroh, Isehara-shi Kanagawa (JP)
(74) Representative: Forsythe, Dominic

(57) **Abstract**

A facsimile apparatus that receives an e-mail message through a local area network, stores image data contained in the e-mail message in a data storage unit, converts the image data stored in the data storage unit into image data that a facsimile terminal can properly handle, and transfers the converted image data to the facsimile terminal. The facsimile apparatus accordingly can transfer the image data contained in the received e-mail message to the facsimile terminal even if the facsimile terminal cannot receive e-mail messages.

## Description

The present invention generally relates to a facsimile apparatus, and more particularly, to a facsimile apparatus that transfers received data to a registered destination.

A recent development in communication technology has realized a facsimile apparatus that a group of people can use as a common resource via a local area network (LAN). A facsimile apparatus that can receive and print an e-mail message is further proposed.

The Japanese Laid-open Patent Application No. 11-355347 discloses an example of such a facsimile apparatus. The facsimile apparatus disclosed in this application receives only e-mail messages sent from registered e-mail addresses, and disposes or transfers e-mail messages coming from e-mail addresses other than the registered e-mail addresses. The facsimile apparatus accordingly avoids printing unnecessary direct mails.

However, the facsimile apparatus according to the conventional technique may fail to transfer a necessary e-mail message to a user who needs the e-mail message. The conventional facsimile apparatus further cannot transfer the e-mail message to a user who is not capable of receiving e-mail messages. The conventional facsimile apparatus cannot accept an instruction to transfer the e-mail message at a designated time.

On the other hand, the Japanese Laid-open Utility Model Application No. 4-8571 discloses a facsimile apparatus that transfers an e-mail message to a destination corresponding to the sender of the e-mail message. But the destination is limited to a facsimile apparatus or an equivalent apparatus that can exchange image data with the disclosed facsimile apparatus.

Accordingly, it is a general object of the present invention to provide a novel and useful facsimile apparatus by which one or more of the problems described above are eliminated.

Another and more specific object of the present invention is to provide a facsimile apparatus that can manage the transfer operation of image data sent via e-mail based on the capability of the destination, and to accept an instruction to transfer the image data at a designated time.

To achieve one of the above objects, a facsimile apparatus that can exchange e-mail messages through a local area network and exchange image data through an analog public network, according to the present invention, includes the following: a data storage unit that stores an e-mail message received through said local area network, a data conversion unit that converts data contained in the received e-mail message into facsimile image data using a method corresponding to the type of said data, a transfer destination registration unit that registers therein a phone number of a facsimile terminal to be communicated through said analog public network as a transfer destination of said facsimile image data, and a transfer control unit that transfers said facsimile image data that are received through said local area network, stored in said data storage unit, and converted by said data conversion unit, to said facsimile terminal registered in said transfer destination registration unit.

The above facsimile apparatus receives an e-mail message through the local area network, converts image data contained in the e-mail message into image data that the facsimile terminal can properly handle, and transfers the converted image data. Accordingly, the facsimile apparatus can transfer the image data contained in the received e-mail message to the facsimile terminal even if the facsimile terminal cannot receive an e-mail message.

Other objects, features, and advantages of the present invention will become more apparent from the following detailed description when read in conjunction with the accompanying drawings.
Fig. 1 is a schematic drawing showing a system structure to which a network facsimile apparatus according to an embodiment of the present invention is connected;
Fig. 2 is a block diagram showing the network facsimile apparatus 10 according to an embodiment of the present invention;
Fig. 3 is a table indicating registered information according to the first embodiment of the present invention;
Fig. 4 is a table to explain a step of process according to the first embodiment of the present invention;
Fig. 5 is another table to explain a step of process according to the first embodiment of the present invention;
Fig. 6 is a flow chart showing receiving operation according to the first embodiment of the present invention;
Fig. 7 is a flow chart showing transferring operation according to the first embodiment of the present invention;
Fig. 8 is a table to explain a step of process according to the second embodiment of the present invention;
Fig. 9 is a flow chart showing receiving operation according to the second embodiment of the present invention;
Fig. 10 is a flow chart showing receiving operation according to the second embodiment of the present invention; and
Fig. 11 is a flow chart showing transferring operation according to the third embodiment of the present invention.

A detailed description of the preferred embodiments of the present invention will be given below by reference to the drawings. A network facsimile apparatus will be described below as an embodiment of the present invention. Those skilled in the art, however, will recognize that the present invention is not limited to network facsimile apparatuses but applicable to other types of facsimile apparatus.

### (The first embodiment)

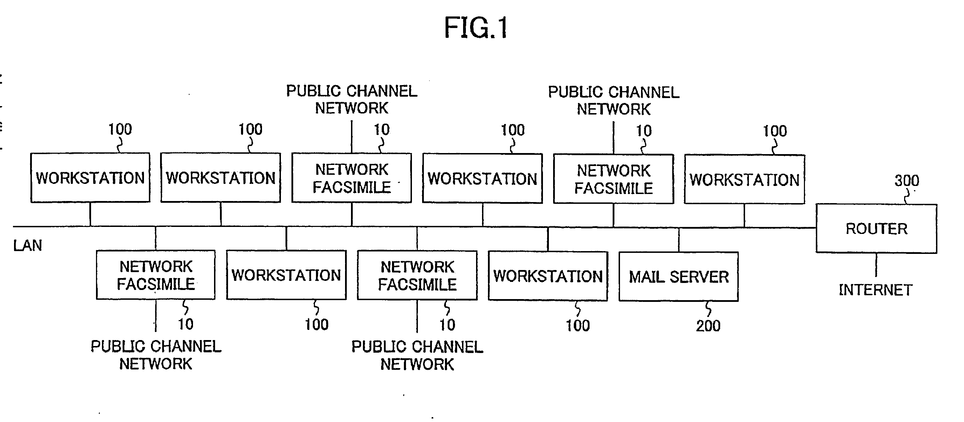

Fig. 1 is a schematic drawing showing a system structure to which a network facsimile apparatus according to the first embodiment is connected.

As showed in Fig. 1, network facsimile apparatuses 10 are connected to a local area network (LAN) and can communicate with workstations 100, a mail server 200, and a router 300. The plurality of network facsimile apparatuses 10 and the plurality of workstations 100 are disposed in each station. The network facsimile apparatuses 10 and the workstations 100 can access the Internet through the router 300, and send and/or receive e-mail messages by accessing the mail server 200 that provides an e-mail collection and distribution service. It does not matter whether the access to the LAN, the Internet, and the public channel network is wired or wireless as long as the access is secured.

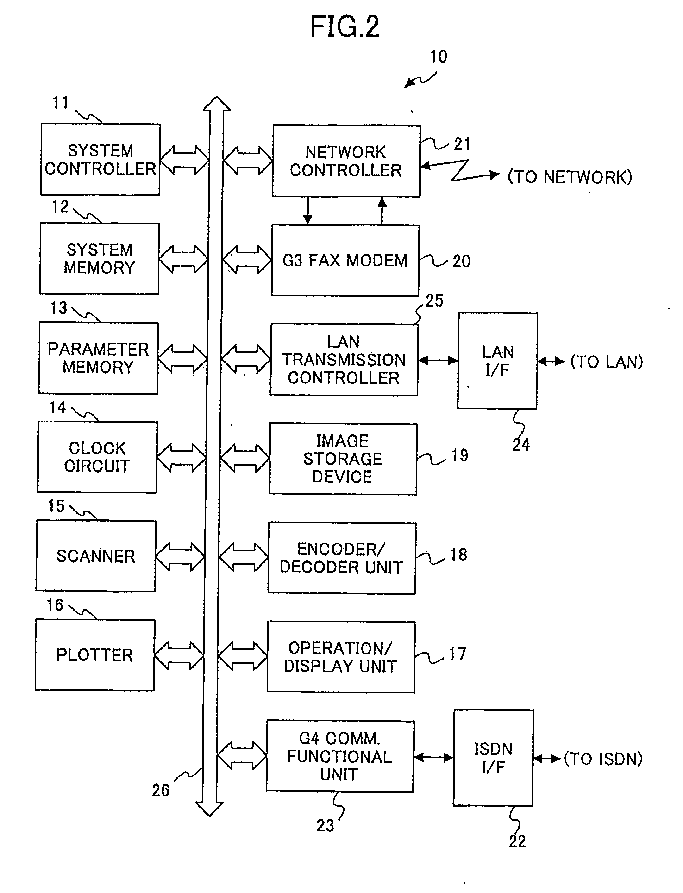

Fig. 2 is a block diagram showing the network facsimile apparatus 10 according to the first embodiment. The network facsimile apparatus 10 includes: a system controller 11, a system memory 12, a parameter memory 13, a clock circuit 14, a scanner 15, a plotter 16, a operation/display unit 17, an encoder/decoder unit 18, an image storage device 19, a group 3 (G3) facsimile modem 20, a network controller 21, a group 4 (G4) data communication functional unit 23, and a LAN transmission controller 25 which are all connected to an internal bus 26. An Integrated Services Digital Network (ISDN) interface circuit 22 and a LAN interface circuit 24 are also connected to the internal bus 26 through the G4 data communication functional unit 23 and the LAN transmission controller 25, respectively. Each component can exchange data with another component via the internal bus 26.

The system controller 11 runs control programs to control each component and performs facsimile transmission control procedures and various controls according to the present invention. The system memory 12 stores control programs that the system controller 11 runs and various data necessary for the performance of the control programs. The system memory 12 further provides a working memory area to the system controller 11 for the temporary storage of working data. The parameter memory 13 stores various data that are unique to this network facsimile apparatus 10. The clock circuit 14 outputs current time information.

The scanner 15 reads the image of documents at a designated resolution. The plotter 16 prints image data at a designated resolution. The operation/display unit 17 is provided with operational keys through which a user operates the network facsimile apparatus 10 and a display unit that displays various information. The encoder/decoder unit 18 encodes and compresses image data, and decodes image data that are encoded and compressed into original image data. The image storage device 19 stores many items of image data that are encoded and compressed.

The group 3 facsimile modem 20 is a modem that is used when the network facsimile apparatus 10 exchanges image data with another group 3 facsimile through a group 3 facsimile communication. The group 3 facsimile modem 20 communicates in two modes: a low speed modem mode (V.21 modem) for exchanging transmission procedure signals and a high speed modem mode (V.17 modem, V.34 modem, V.29 modem, V.27 ter modem, and so forth) for exchanging mainly image data signals. The network controller 21 is provided with automatic transmission/reception function and connected to the public channel network (PSTN).

The ISDN interface circuit 22 connects the network facsimile apparatus 10 to the ISDN. The group 4 data communication functional unit 23 is provided with a G4 communication controller, a D channel controller, a layer signal controller and so forth, and controls G4 communication to exchange various data with another data terminal.

The LAN interface circuit 24 connects the network facsimile apparatus 10 to the LAN. The LAN transmission controller 25 controls communication of a protocol suite to exchange data with another data terminal through the LAN.

The terminals connected to the LAN exchange data with each other in compliance with so-called TCP/IP (Transmission Control Protocol / Internet Protocol). An upper rank layer protocol called SMTP (Simple Mail Transfer Protocol) is employed for exchanging e-mail messages. Another upper rank layer protocol called POP (Post Office Protocol) is employed in the case where each terminal queries the mail server 200 whether the mail server 200 has received an e-mail message addressed to the terminal and requests the mail server 200 to deliver the e-mail message. Instead of TCP, a protocol suite of UDP (User Datagram Protocol) is also applicable.

The network facsimile apparatus 10 has two functions, image data transmission function (facsimile communication function) and server function. When the image data transmission function is activated, the network facsimile apparatus 10 transmits (or receives) scanned image data to (from) another G3 or G4 facsimile apparatus through the public channel network or ISDN. The network facsimile apparatus 10 serves a workstation 100 as a server (server function) so that the workstation 100 receives the scanned image data through the LAN and transmits image data to another G3 or G4 facsimile apparatus by activating the G3 and/or G4 facsimile modem. The network facsimile apparatus 10 transfers image data received from another G3 or G4 facsimile apparatus through the public channel network or ISDN to a user designated as a sub-address through e-mail. The network facsimile apparatus 10 further transfers image data received from a workstation 100 connected on the LAN through e-mail to another G3 or G4 facsimile apparatus designated by an abbreviated dial number through the public channel network and the ISDN. The network facsimile apparatus 10 can control the protocol of Real-time Internet Facsimile (RI-FAX) based on T.38 and H.232. Additionally, when the network facsimile apparatus 10 receives an e-mail message addressed to it, the network facsimile apparatus 10 separates image data contained in the e-mail message and prints the image data.

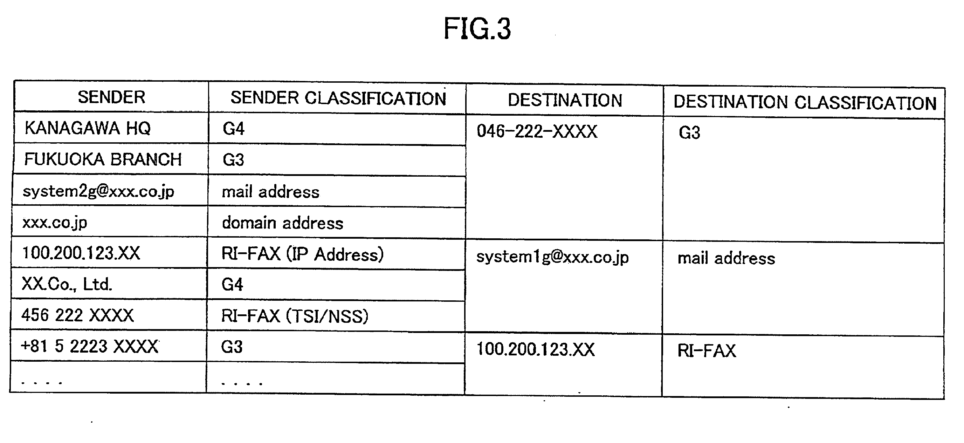

As showed in Fig. 3, a user can register senders and corresponding destinations to which the network facsimile apparatus 10 transfers received image data. When the network facsimile apparatus 10 receives image data from a registered sender, the network facsimile apparatus 10 transfers the received image data to a predetermined destination corresponding to the registered sender. Either the phone number (in the case where the destination is G3 FAX), the e-mail address (in the case where the destination is e-mail), or the IP address (in the case where the destination is RI-FAX) of the destination is registered for each sender as information indicating destination. Before transferring the received image data, the network facsimile apparatus 10 converts, if necessary, the received image data into data that the destination can receive. As showed in Fig. 3, in the case where an IP address is designated, the user can register the IP address itself as a destination corresponding to a sender. The user, however, can register host name of the destination instead of its IP address since the network facsimile apparatus can inquire of the DNS (Domain Name System) server about corresponding IP address.

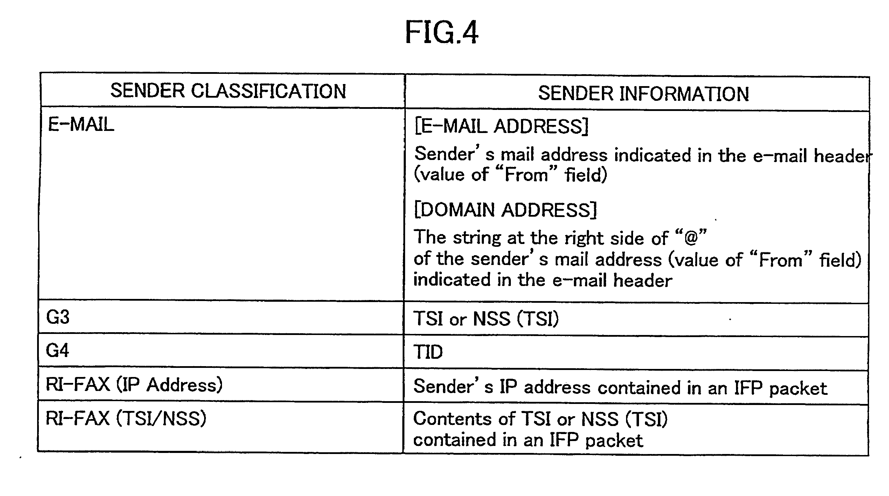

When receiving data, the network facsimile apparatus 10 determines whether to transfer the data based on the sender information. The network facsimile apparatus 10 further determines whether, and how, if necessary, to convert the received data based on the sender classification and the destination classification. As showed in Fig. 4, the sender information is obtained from the e-mail address and the domain name of the sender indicated in the e-mail header (in the case where the sender classification is e-mail), from TSI (Transmitting Subscriber Identification) or NSS (TSI) (Non-Standard facilities Set-up) (in the case where the sender classification is G3 FAX), from TID (Terminal IDentifier) (in the case where the sender classification is G4 FAX), or from the terminal identifier such as IP address, TSI, and NSS contained in IFP (Internet Fax Protocol) packet (in the case where the sender classification is RI-FAX). In the case of RI-FAX, the network facsimile apparatus 10 obtains a plurality of items of sender information (two in this case) because the network facsimile apparatus 10 cannot uniquely identify the sender only with an IP address under the circumstance where the IP address of the sending RI-FAX is not fixed since, for example, a DHCP (Dynamic Host Configuration Protocol) server is used.

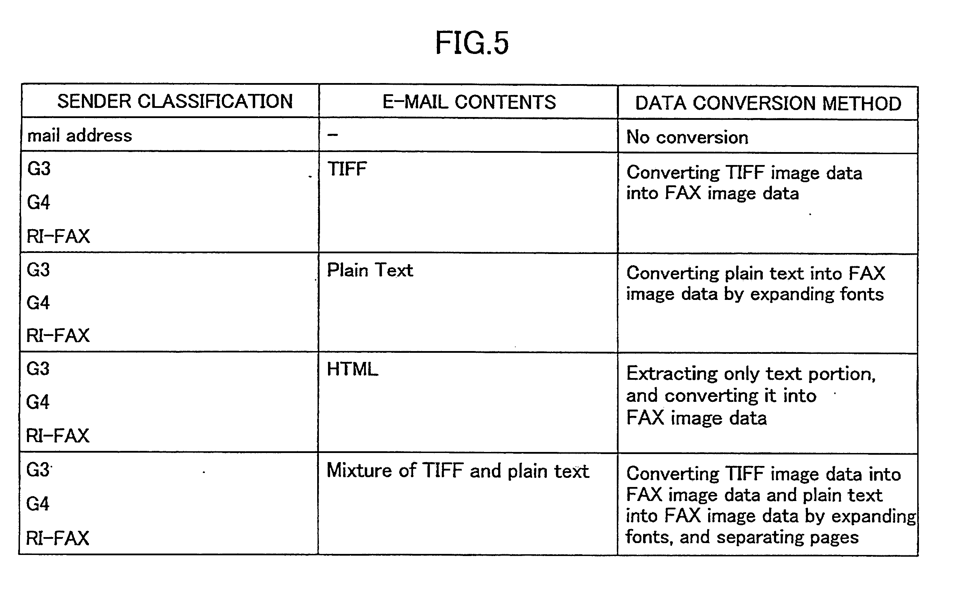

When transferring the received data, the network facsimile apparatus 10 converts the received data, if necessary, based on the conversion method determined to be applicable to the combination of the sender classification and the destination classification. As showed in Fig. 5, in the case where the data received as an e-mail message is to be transferred to an e-mail address, no data conversion is required. In the case where the received data are to be transferred to either G3 FAX, G4 FAX, or RI-FAX, and the received data are TIFF (Tag Image File Format), the received data are directly converted into FAX image data. In the case where the received data are a plain text, the received data are converted into FAX image data by expanding fonts. In the case where the received data are HTML (Hyper Text Markup Language), only the text portion of the received data is converted into FAX image data. In the case where the received data are mixture of TIFF and plain text, TIFF and plain text are separated in different pages. The above conversions into FAX image data shall include a step of converting the data by applying compression methods respectively corresponding to G3 FAX, G4 FAX, and RI-FAX.

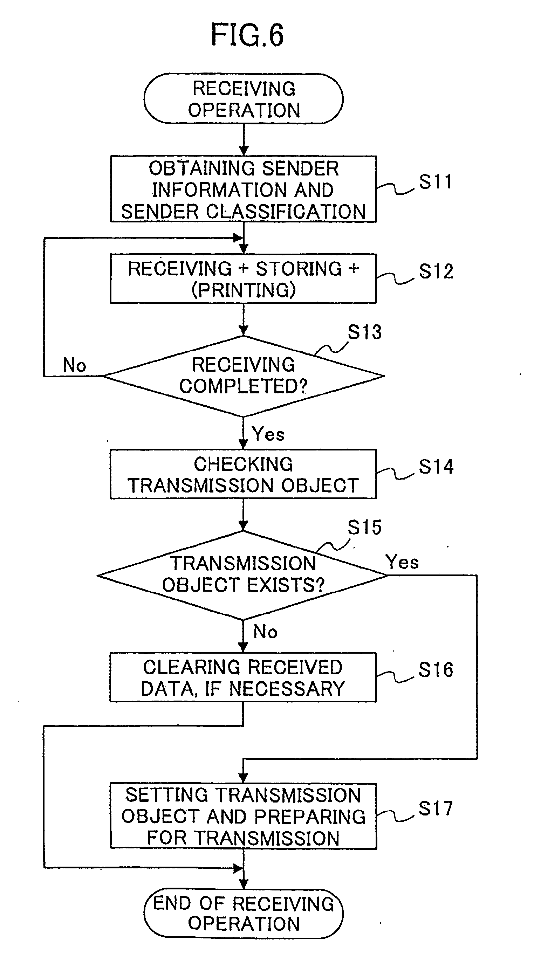

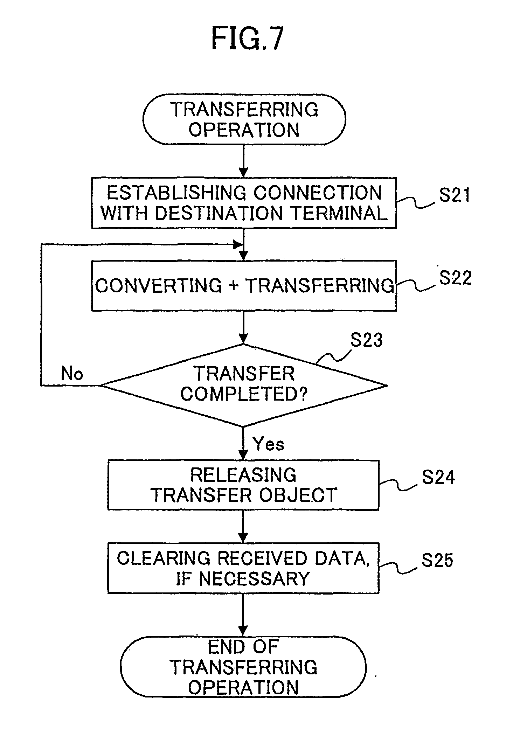

The operation of the network facsimile apparatus 10 will be described by reference to Figs. 6 and 7.

As showed in Fig. 6, at the beginning of reception, the network facsimile apparatus 10 obtains the sender's information by the method described in Fig. 4 (step S11). While receiving data, the network facsimile apparatus 10 stores the received data in the memory and, if necessary, in the case where a user has given an instruction, for example, prints the received data with the plotter 16 (step S12). When determining that the reception has been completed (step S13), the network facsimile apparatus 10 determines whether the received data are to be transferred or not by comparing the sender information and classification with the registered information showed in Fig. 3 (steps S14 and S15).

If no registered sender matches the sender of the received data, the network facsimile apparatus 10 does not transfer the received data and exits this receiving operation after, if the receiving data are addressed to the network facsimile apparatus 10 itself but has not been printed at step S12, printing the received data or, if the receiving data are not addressed to the network facsimile apparatus 10 and unnecessary to be stored, clearing the received data in accordance with the user's instruction (step S16).

If a registered sender matches the sender of the received data, the network facsimile apparatus 10 sets the transfer object by relating the destination corresponding to the registered sender with the received data and so forth to prepare for the transfer (step S17).

The user can set the network facsimile apparatus 10, if necessary, so that it does not print the received data if the received data are to be transferred or it prints the received data after completing the reception. It is also convenient if the user can set the mode by which the network facsimile apparatus 10 clears the received data, such as the user can clear the received data manually.

As showed in Fig. 7, when the network facsimile apparatus 10 transfers, after completing the reception, the network facsimile apparatus 10 connects to the destination terminal to which the transfer object prepared in response to reception is to be transferred (step S21), While converting data in compliance with the conversion method depending on the sender classification and the destination classification as showed in Fig. 5, the network facsimile apparatus 10 transfers the converted data until the transfer is completed (steps S22 and S23). The network facsimile apparatus 10 uses a port (channel) that has been designated as the transfer destination. Needless to say, the network facsimile apparatus 10 connects to the destination terminal by the designated protocol.

When determining that the transfer has been completed, the network facsimile apparatus 10 removes the received data from the transfer objects (step S24). The network facsimile apparatus 10 clears the received data that has been transferred in accordance with the user's setting, without storing the received data in the memory, if the user's setting demands to do so, for example (step S25). Then, the network facsimile apparatus 10 exits this process.

In addition, needless to say, the network facsimile apparatus 10 responds to any error caused in the receiving operation or the transferring operation. The description of the above response to an error is omitted here in this specification.

As described above, since the network facsimile apparatus according to the first embodiment of the present invention transfers data received through a local area network as an e-mail message after converting the data into image data that a facsimile apparatus registered as the transfer destination can accept, the network facsimile apparatus can transfer the received data even if the transfer destination does not have e-mail communication function.

Since the network facsimile apparatus according to the first embodiment converts data contained in an e-mail message that are received and/or stored in the memory into data of another data format that the destination terminal can accept, and then transmits the converted data, the network facsimile apparatus can transfer the converted data contained in the e-mail message to a destination terminal having the real-time Internet facsimile function.

The network facsimile apparatus according to the first embodiment can transfer not only data contained in an e-mail message but also data sent from a terminal having the real-time Internet facsimile function. Accordingly, the network facsimile apparatus reduces the restriction on the sender because it can transfer data of various formats.

Additionally, the network facsimile apparatus according to the first embodiment registers the e-mail address, the IP address of the real-time Internet facsimile terminal, the terminal identification information of facsimile apparatuses for the public channel network, as well as data formats as the sender identification information, and relates the sender identification information to each destination. The network facsimile apparatus accordingly can select the destination to transfer, convert the data format of the received data into what is acceptable by the destination, and transfer the converted received data. That is, the network facsimile apparatus can transfer the received data to the destination corresponding to the sender, or to the destination corresponding to the data format of the sender.

Additionally, the network facsimile apparatus according to the first embodiment identifies the sender by separating the domain name of the sender from the received e-mail message, and transfers the image data contained in the received e-mail message to the corresponding destination after converting the data format of the image data. Accordingly, the network facsimile apparatus can transfer the data contained in the e-mail message to the destination corresponding to the sender using the data format that the destination can accept.

When data is received through the real-time Internet facsimile function, the data is transferred to the destination corresponding to the sender identified based on the IP address of the sender or the terminal identification information contained in the packet with the acceptable data format. The above received data is transferable to the destination corresponding to the sender under the data format that is acceptable by the destination.

Accordingly, the network facsimile apparatus can seamlessly exchange data of various formats flexibly in accordance with the communication function of the destination without restricting data format strictly. As a result, the present invention can provide a network facsimile apparatus of high flexibility.

### (The second embodiment)

The network facsimile apparatus according to the second embodiment of the present invention is structured identically to the network facsimile apparatus according to the first embodiment. Components of the network facsimile apparatus according to the second embodiment that are identical to those of the network facsimile apparatus according to the first embodiment are referred to by the same numerals, and a description of the identical components is omitted.

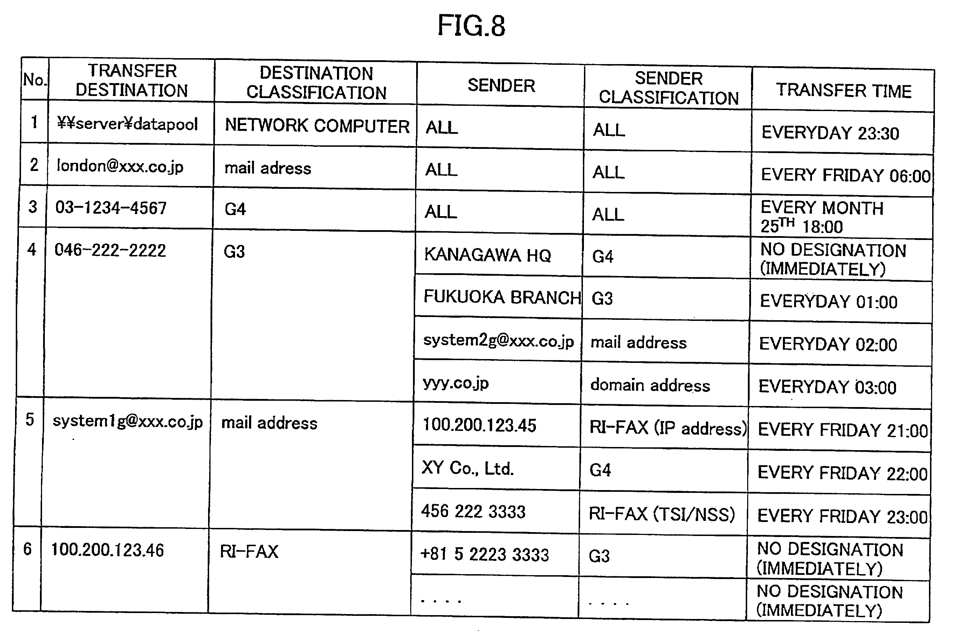

The network facsimile apparatus according to the second embodiment enables a user to set the time at which the network facsimile apparatus starts transferring image data contained in e-mail messages, and transfers the image data that have been received by the set time, in connection with the setting of the time at the set time. The setting of the time at which the network facsimile apparatus starts transferring the image data contained in e-mail messages will be described by reference to Fig. 8. Fig. 8 is a table showing the setting of the transfer time depending on the destination classification and the sender classification. In the case where the destination is a network computer (No. 1), the network facsimile apparatus is set so that it transfers all data transmitted by all senders to the destination at 23:30 everyday.

In the case where the destination is a workstation (No. 2), the network facsimile apparatus is set so that it transfers all data transmitted by all senders to the destination at 6:00 every Friday. In the case where the destination is a G4 FAX (phone number 03-1234-4567) (No. 3), the network facsimile apparatus is set so that it transfers all data transmitted by all senders to the destination at 18:00 on the 25^{th} of every month.

In the case where the destination is G3 FAX (No. 4), the data transmitted by the G4 FAX of the sender KANAGAWA HQ are transferred immediately; the data transmitted by the G3 FAX of the sender FUKUOKA BRANCH are transferred at 1:00 every day; the data transmitted by the workstation at the e-mail address system2g@xxx.co.jp are transferred at 2:00 everyday; and the data transmitted by the domain yyy.co.jp are transferred at 3:00 everyday.

In the case where the destination is a workstation (e-mail address systemlg@xxx.co.jp) (No. 5), the data transmitted by the RI-FAX of the IP address 100.200.123.45 are transferred at 21:00 every Friday; the data transmitted by the G4 FAX of the sender XY Co., Ltd. are transferred at 22:00 every Friday; the data transmitted by the RI-FAX of which TSI or NSS is 456 222 3333 are transferred at 23:00 every Friday.

In the case where the destination is RI-FAX (IP address 100.200.123.46) (No. 6), the data transmitted by the G3 FAX (phone number +81 5 2223 3333) are transferred immediately. In addition to setting the network facsimile apparatus to transfer the data immediately, the user can set the network facsimile.apparatus so that it starts transferring the data at a predetermined time everyday or on a desired day every week, or on a desired day every month.

The information contained in the table showed in Fig. 8, indicating the transfer time depending on the destination and the sender, may be stored in the system memory 12 in the manner in which these items are related. In this case, when transferring the received data, the system controller 11 refers to the system memory 12 and starts the transfer at the transfer time corresponding to both the destination and the sender. Likewise, the memory units 12 and/or 13 may store one or more transfer times at which the network facsimile apparatus uniformly starts transferring irrespectively of the destination.

Similarly, the memory units 12 and/or 13 may store transfer time at which the network facsimile apparatus uniformly starts transferring irrespectively of both the destination and the sender. In this case, the network facsimile apparatus uniformly starts transferring the received data at the transfer time irrespectively of the destination or both the sender and the destination.

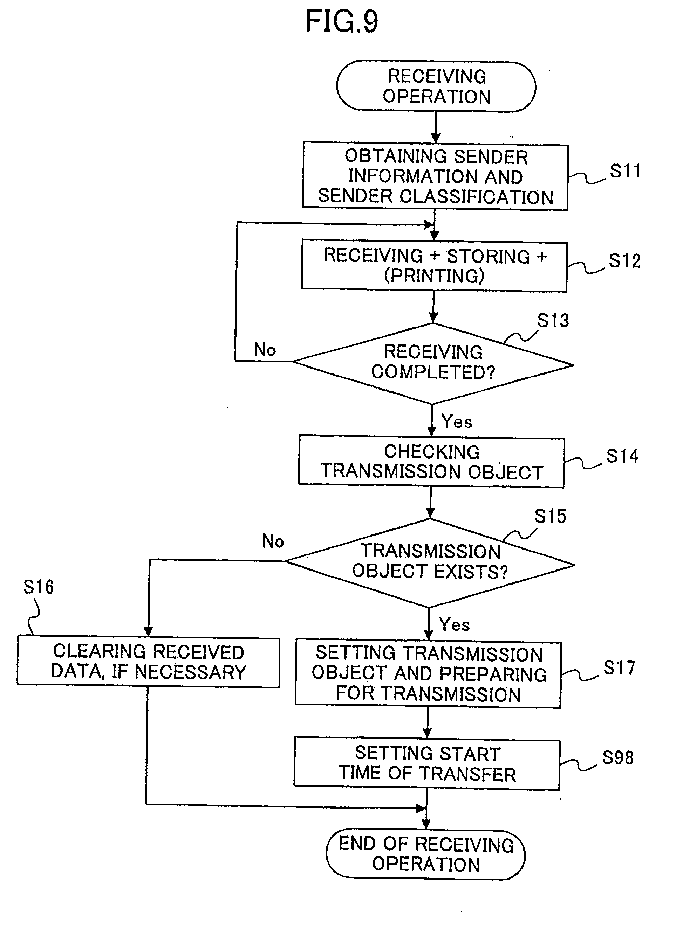

The receiving operation where the transfer time of the received data is set will be described by reference to Fig. 9. The flow chart showed in Fig. 9 is different from that showed in Fig. 6 in that a new step S98 is additionally provided following step S17 where the network facsimile apparatus sets the transfer object and prepares for the transfer. Steps identical to those showed in Fig. 6 will be referred to by the same numerals and a description of the identical steps is omitted.

After the network facsimile apparatus sets the transfer object and prepares for the transfer (step S17), the network facsimile apparatus sets the transfer time corresponding to both the destination and the sender for each item of received data to be transferred (step S98) and finishes the receiving operation.

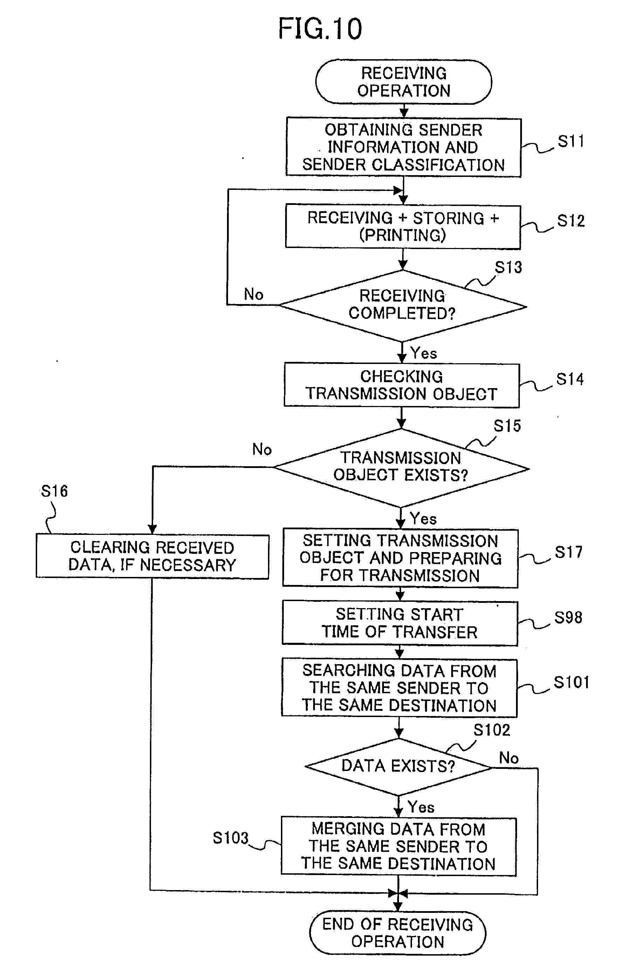

Likewise, as showed in Fig. 10, after setting the transfer time (step S98), the network facsimile apparatus searches items of data that are to be transferred to the same destination and received from the same sender (step S101) and determines whether any items of data are found (step S102). If a plurality of data items has been found, they are merged into a file or a job (step S103). If no data item has been found, the network facsimile apparatus finishes the receiving operation.

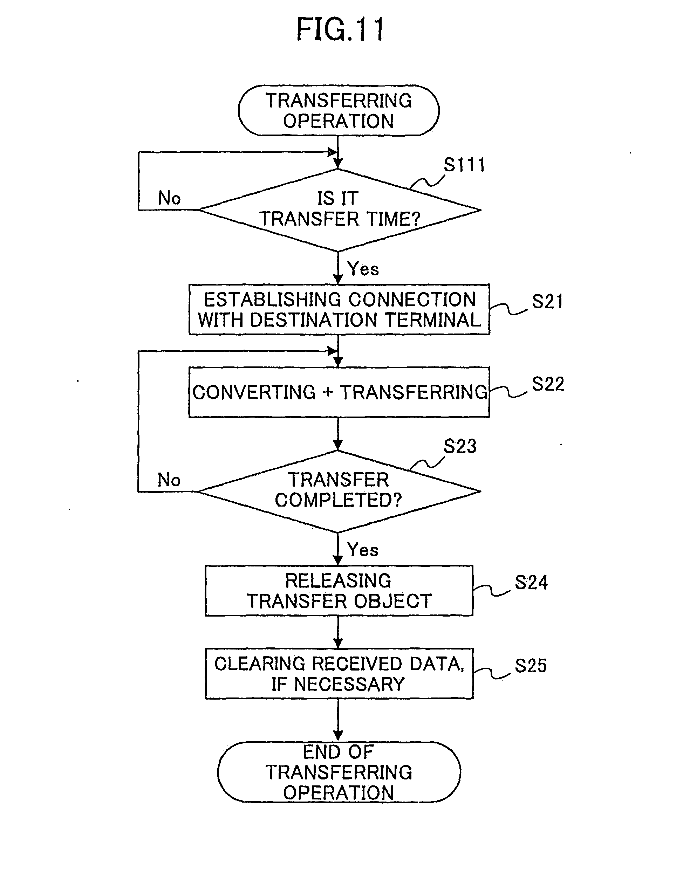

The transferring operation where the transfer time is set will be described by reference to Fig. 11. The flow chart showed in Fig. 11 is the same as the flow chart showed in Fig. 7 but a new step S111 is additionally provided before the step S21 where the network facsimile apparatus establishes a connection with a destination terminal. Identical steps are referred to by the same numerals and the description of the identical steps is omitted.

In the transferring operation, the network facsimile apparatus determines whether it is the transfer time set in the above step S98 in which the transfer time is set so that the network facsimile apparatus starts transferring the received data at the transfer time (step S111). Determining that it is not the transfer time, the network facsimile apparatus repeats the decision step until the transfer time comes. When determining that it is the transfer time, the network facsimile apparatus performs the following steps starting at step S21 to complete the transferring operation.

Accordingly, the network facsimile apparatus can seamlessly exchange data of various formats flexibly in accordance with the communication function of the destinations without restricting data format strictly. As a result, the present invention can provide a network facsimile apparatus of high flexibility. In addition, the network facsimile apparatus can be similarly applicable to facsimile apparatuses without the network function to communicate through the public channel.

In addition, the network facsimile apparatus according to the second embodiment may perform the operation described in connection with the first embodiment. In this case, the network facsimile apparatus according to the second embodiment performs the operation described in connection with the first embodiment and, additionally, the above transfer time operation.

As described above, since the network facsimile apparatus according to the second embodiment starts transferring the received data at the transfer time determined for each.destination, the network facsimile apparatus can complete the whole transfer within a time period in which the transfer does not disturb other facsimile communications or in which communication cost is low.

Also, if one or more items of identification information of senders corresponding to identification information of each destination such as telephone numbers and e-mail addresses are stored in the memory, it is possible to assign different transfer times to each sender corresponding to even the same destination. Accordingly, the destination can easily separate the image data transferred by the network facsimile apparatus and, if necessary, put priority order to the image data in accordance with the level of urgency.

Additionally, the network facsimile apparatus can transfer at a time the whole accumulated items of image data received separately. This advantage is effective to shorten the communication time and to reduce the communication cost.

The network facsimile apparatus can also use a time period where the risk of disturbing the other facsimile communication is low and/or the communication cost is low, because the user can set the transfer time at which the network facsimile apparatus starts transferring the image data received by an e-mail message to a facsimile apparatus through the public channel network.

The network facsimile apparatus can efficiently transfer the image data to a terminal having the real-time Internet facsimile function within a time period when network traffic is low. Also, the network facsimile apparatus can transfer the image data received from the terminal having the real-time Internet facsimile function.

The user can store the image data received by the network facsimile apparatus in a secondary storage such as a hard disk drive of the workstation through the LAN.

Since one or more items of identification information of senders corresponding to identification information of each destination can be stored in the memory, it is possible to assign different transfer times to each sender corresponding to even the same destination. Accordingly, the destination can easily separate the image data transferred by the network facsimile apparatus and, if necessary, put priority order to the image data in accordance with the level of urgency.

The structure of various aspects of the network facsimile apparatus according to the present invention and their effects will be summarized as follows,

According to an aspect of the present invention, a network facsimile apparatus that can exchange e-mail messages through a local area network and exchange image data through an analog public network, includes: a data storage unit that stores an e-mail message received through the local area network, a data conversion unit that converts data contained in the received e-mail message into facsimile image data using a method corresponding to the type of the data, a transfer destination registration unit that registers therein a phone number of a facsimile terminal to be communicated through the analog public network as a transfer destination of the facsimile image data, and a transfer control unit that transfers the facsimile image data that are received through the local area network, stored in the data storage unit, and converted by the data conversion unit, to the facsimile terminal registered in the transfer destination registration unit.

The above network facsimile apparatus receives an e-mail message through the local area network, converts image data contained in the e-mail message into image data that the facsimile terminal can properly handle, and transfers the converted image data. Accordingly, the network facsimile apparatus can transfer the image data contained in the received e-mail message to the facsimile terminal even if the facsimile terminal cannot receive an e-mail message.

In the above network facsimile apparatus, the network facsimile apparatus is provided with a data communication function for facsimile communication through the Internet in compliance with a given protocol. In this case, the transfer destination registration unit registers, in addition to the phone number of the facsimile apparatus to be communicated through the analog public network, destination information of a terminal that is provided with the data communication function complying with the protocol and information indicating a data format with which the terminal can communicate so that the destination information of the terminal is related to the information indicating the data format, and the data conversion unit converts data formats of received image data and the data contained in the received e-mail message into the data format of the terminal registered in the transfer destination registration unit.

The above network facsimile apparatus, in the case of a terminal that has data communication function complying with a given protocol for the real-time Internet facsimile through the Internet, converts the e-mail messages and/or image data received and stored by the network facsimile apparatus into image data that the terminal can properly handle by changing data format of the image data. Accordingly, the network facsimile apparatus can transfer the image data contained in the received e-mail to the terminal having the real-time Internet facsimile function.

In the above network facsimile apparatus, the transfer control unit causes the data storage unit to store data received, in compliance with the protocol, and transfers the data to a destination registered in the transfer destination registration unit.

The above network facsimile apparatus can transfer data received from the real-time Internet facsimile terminal as well as the image data contained in the e-mail message. Accordingly, the network facsimile apparatus can receive image data from more sender terminals and transfer image data of various data formats.

In the above network facsimile apparatus, the network facsimile apparatus can further include a sender registration unit that registers identification information, for identifying a sender of received data, so that the identification information corresponds to the transfer destination registered in the transfer destination registration unit, and the transfer control unit, when the sender of received data is registered by the sender registration unit, transfers the received data to corresponding transfer destinations.

The above network facsimile apparatus can register, for example, e-mail addresses, IP addresses of real-time Internet facsimile terminals, or terminal identification information of facsimile terminals for the analog public network, and/or data format as sender identification information of the received image data so that the senders correspond to the respective transfer destinations. Accordingly, the network facsimile apparatus can select a transfer destination that corresponds to the sender and converts the received data into image data that the transfer destination can accept.

In the above network facsimile apparatus, the transfer control unit further comprises a domain name extraction unit that extracts a domain name of a sender based on a received e-mail message, causes, if the domain name is registered in the sender registration unit, the data storage unit to store the e-mail message, and transfers data contained in the e-mail message to the transfer destination.

The above network facsimile apparatus can extract the domain name of the sender's e-mail message from the received e-mail message, identify the sender, and convert the data format of the image data contained in the e-mail message. Accordingly, the network facsimile apparatus can transfer image data having the data format that the transfer destination can receive without a problem.

In the above network facsimile apparatus, in a case where the network facsimile apparatus is provided with the data communication function complying with the protocol, the sender registration unit can register, as information for identifying the sender, an IP address of the sender and terminal identification information contained in a received packet.

For example, when receiving data by the real-time Internet facsimile function, the network facsimile apparatus identifies the sender based on the IP address of the sender or the terminal identification information of the sender contained in the packet and transfers the received data to the transfer destination corresponding to the sender after converting the data format of the data. Accordingly, the network facsimile apparatus can transfer the received data to the transfer destination corresponding to the sender using the data format that the transfer destination can receive without any problem.

In another aspect of the present invention, a facsimile apparatus that receives image information from a transmitter side facsimile terminal and having a given communication function, can include a data storage unit that stores the received image information, a transfer destination registration unit that stores one or more items of identification information of destinations to which the received image information is transferred, a setting time storage unit that stores one or more setting times at which transfer of the received image information is started, and a transfer control unit that transfers the image information, stored by the data storage unit, to the transfer destination, stored by the transfer destination registration unit, as the transfer destination of the received image information at the setting time, stored by the setting time storage unit, for the transfer destination.

The network facsimile apparatus according to this aspect of the present invention can start transferring the received data to each transfer destination at the time designated to each transfer destination. Accordingly, the network facsimile apparatus can select a time zone where the transfer of the received data does not interfere with the other facsimile communications and/or a time zone where the communication cost is low and transfer the received data accumulated in the data storage unit.

In yet another aspect of the present invention, a facsimile apparatus that receives image information transmitted by a transmitter side facsimile terminal and transfers the received image information to a plurality of transfer destinations, can include the following: a transfer destination registration unit that registers one or more items of identification information of transfer destinations to which the received image information is transferred, a sender registration unit that registers one or more items of identification information of senders corresponding to identification information of each transfer destination stored in the transfer destination registration unit, a setting time storage unit that stores one or more setting times at which transfer of the received image information is started to each transfer destination stored in the transfer destination registration unit, a determination unit to determine, when the image information is received, whether the sender of the received image information is registered by the sender registration unit, a data storage unit that stores the image information that is determined that the sender of the received image information is registered by the sender registration unit, a transfer destination extraction unit that extracts a transfer destination corresponding to the sender of the image information stored by the data storage unit from the transfer destination registration unit, and a transfer control unit that starts transferring the image information that is received by the setting time and stored by the data storage unit to the transfer destination, extracted by the transfer destination extraction unit at the setting time corresponding to the transfer destination.

Because the above network facsimile apparatus is provided with the sender registration unit that stores one or more senders corresponding to each transfer destination, the user can designate different points of time to each transfer destination of the sender. Accordingly, the user can make it simple to separate the received data by the sender and may prioritize the received data based on the level of urgency.

In the above facsimile apparatus, the set time storage unit further can store one or more times at which the transfer of the whole image information is started and stores either the set time designated for each transfer destination or the set time for the transfer of the whole image information at a time, the transfer control unit starts transferring the image information received and accumulated by the data storage.unit by the set time stored in the set time storage unit at the set time corresponding to the transfer destination extracted by the transfer destination extraction unit.

The above network facsimile apparatus can transfer the entire received data accumulated in the data storage unit at a time. Accordingly, the network facsimile apparatus can reduce the time required for the transfer and the communication cost incurred by the transfer.

According to yet another aspect of the present invention, a network facsimile apparatus having communication functions including a function to exchange e-mail messages through a network and a function to communicate facsimile data, can include the following: a data storage unit that stores an e-mail message received through the network, a data conversion unit that converts data contained in the e-mail message stored by the data storage unit into image data for facsimile by a method corresponding to the type of the data, a determination unit that determines a transfer destination of the data by checking the contents of the data contained in the e-mail message stored by the data storage unit, a transfer destination registration unit that stores a phone number.of a facsimile terminal connected through the analog public network as a transfer destination of the image data for facsimile, a transfer control unit that transfers the image data for facsimile to a counterpart facsimile terminal registered by the transfer destination registration unit, and a set time storage unit that stores one or more set times at which a transfer to each transfer destination is started, and the network facsimile apparatus converts data contained in the e-mail message, accumulated in the data storage unit by the set time, into the image data for facsimile and starts transferring the image data for facsimile to a transfer destination, stored in the transfer destination registration unit, at the set time corresponding to the transfer destination.

In the case where the above network facsimile apparatus transfers image data contained in the received e-mail message to the facsimile terminal communicable through the analog public network, the network facsimile apparatus can designate a point of time at which the transfer is to begin. Accordingly, the network facsimile apparatus can select a time zone where the transfer does not interfere with the other facsimile communication and a time zone where the communication cost is low and transfer the image data at a time.

In the above network facsimile apparatus, the network facsimile apparatus has RI-FAX function to transmit data In compliance with a protocol for the real-time Internet facsimile function, the network facsimile apparatus further comprises: a transfer destination information storage unit that stores identification information including a phone number of a facsimile terminal that can communicate through the analog public network, an IP address or a host name of a terminal provided with the RI-FAX function, and an e-mail address of a terminal that can receive image data through the network as information for identifying a transfer destination of the data, and further stores communication procedure and data format of the facsimile terminals, the data conversion unit converts the data format of the received image information and the data contained in the received e-mail message into the data format of transfer destination terminal, and the transfer control unit starts transferring the converted data to the transfer destination stored in the transfer destination registration unit at the set time corresponding to the transfer destination.

The above network facsimile apparatus can communicate with a real-time Internet facsimile terminal. Accordingly, the network facsimile apparatus can select a time zone where the network traffic is low to make the transfer efficient.

In the above network facsimile apparatus, the data that are transferred may include data received by the RI-FAX function.

The above network facsimile apparatus can further transfer the image information received from the real-time Internet facsimile terminal.

In the above network facsimile apparatus, the network facsimile apparatus further has a function to store data in a hard disk provided on an external computer communicating through the network. According to the function, the transfer destination registration unit stores image data to one or more folders in a hard disk of a computer communicating through the network, the set time storage unit stores information including a time to start the transfer to the folders, and the transfer control unit starts transferring the received image information, data received by the RI-FAX function, or image information contained in the received e-mail to a given folder in the hard disk connected to the given computer communicable through the network at a set time designating the folder as the transfer destination.

The above network facsimile apparatus can store the received image information from various routes and in various data formats to the hard disk connected to the computer that is accessible through the network. Accordingly, the received image information can be stored in a predetermined folder on the network.

The above network facsimile apparatus may further include a sender storage unit that stores identification information including e-mail addresses, IP addresses of terminals having the RI-FAx function, or terminal identification information of facsimile terminals for the analog public channel for identifying one or more senders. So that the senders correspond each item of identification information of transfer destinations stored in the transfer destination registration unit, the following is used:
a sender identification unit that identifies, when image information or data including an e-mail message
is received, identification information of the sender based on the data format of the received data or the classification of the sender terminal, a sender determination unit that determines whether the identification information of the identified sender is registered by the sender identification unit, and
a transfer destination extraction unit that extracts transfer destinations corresponding to the sender when the sender of the received image information is registered in the sender storage unit, and the set time storage unit stores a time at which the network facsimile apparatus starts transferring corresponding to each item of identification information of the senders, and the transfer control unit converts the transfer data into the data format of destination terminal and starts transferring at the time specified based on the identification information of the senders.

Because the above network facsimile apparatus is provided with the sender storage unit for selecting the transfer destination that stores identification information of one or more senders corresponding to the identification information of each transfer destination registered in the transfer destination registration unit, the network facsimile apparatus can designate different points of time to each of the senders corresponding to the same transfer destination. Accordingly, the user may easily separate the received image data based on the senders at the transfer destination side and prioritize the received image data based on the level of urgency.

The preferred embodiments of the present invention are described above. The present invention is not limited to these embodiments, but various variations and modifications may be made without departing from the scope of the present invention.

This patent application is based on Japanese priority patent application No. 2001-263418 filed on August 31, 2001, and No. 2002-227064 filed on August 5, 2002, the entire contents of which are hereby incorporated by reference.

### PREFERRED FEATURES OF THE INVENTION

The preferred features of the invention given below correspond to the claims of the parent application and are included below as numbered paragraphs as part of the description of the present application in order to ensure full disclosure of this subject matter.

Feature 1. A facsimile apparatus that can exchange e-mail messages through a local area network and exchange image data through an analog public network, comprising:
a data storage unit that stores an e-mail message received through said local area network;
a data conversion unit that converts data contained in the received e-mail message into facsimile image data using a method corresponding to the type of said data;
a transfer destination registration unit that registers therein a phone number of a facsimile terminal to be communicated through said analog public network as a transfer destination of said facsimile image data; and
a transfer control unit that transfers said facsimile image data that are received through said local area network, stored in said data storage unit, and converted by said data conversion unit, to said facsimile terminal registered in said transfer destination registration unit.

Feature 2. The facsimile apparatus as in feature 1, wherein
said facsimile apparatus is provided with a data communication function for facsimile communication through the Internet in compliance with a given protocol;
said transfer destination registration unit registers, in addition to said phone number of said facsimile apparatus to be communicated through said analog public network, destination information of a terminal that is provided with said data communication function complying with said protocol and information indicating a data format with which said terminal can communicate so that said destination information of said terminal is related to said information indicating said data format; and
said data conversion unit converts data formats of received image data and the data contained in the received e-mail message into said data format of said terminal registered in said transfer destination registration unit.

Feature 3. The facsimile apparatus as in feature 2, wherein said transfer control unit causes said data storage unit to store data received in compliance with said protocol and transfers said data to a destination registered in said transfer destination registration unit.

Feature 4. The facsimile apparatus as in features 1, 2 or 3, further comprising a sender registration unit that registers identification information for identifying a sender of received data so that said identification information corresponds to said transfer destination registered in said transfer destination registration unit;
wherein said transfer control unit, when the sender of received data is registered by said sender registration unit, transfers said received data to corresponding transfer destination.

Feature 5. The facsimile apparatus as in feature 4, wherein
said transfer control unit further comprises a domain name extraction unit that extracts a domain name of a sender based on a received e-mail message, causes, if said domain name is registered in said sender registration unit, said data storage unit to store said e-mail message,'and transfers data contained in said e-mail message to the transfer destination.

Feature 6. The facsimile apparatus as in feature 4, wherein, in a case where said facsimile apparatus is provided with said data communication function complying with said protocol, said sender registration unit can register, as information for identifying said sender, an IP address of said sender and terminal identification information contained in a received packet.

Feature 7. A facsimile apparatus that receives image information from a transmitter side facsimile terminal and having a given communication function, comprising:
a data storage unit that stores the received image information;
a transfer destination registration unit that stores one or more items of identification information of destinations to which the received image information is transferred;
a setting time storage unit that stores one or more setting times at which transfer of the received image information is started; and
a transfer control unit that transfers the image information stored by said data storage unit to the transfer destination stored by said transfer destination registration unit as the transfer destination of the received image information at said setting time stored by said setting time storage unit for said transfer destination.

Feature 8. A facsimile apparatus that receives image information transmitted by a transmitter side facsimile terminal and transfers the received image information to a plurality of transfer destinations, comprising:
a transfer destination registration unit that registers one or more items of identification information of transfer destinations to which the received image information is transferred;
a sender registration unit that registers one or more items of identification information of senders corresponding to identification information of each transfer destination stored in said transfer destination registration unit;
a setting time storage unit that stores one or more setting times at which transfer of the received image information is started to each transfer destination stored in said transfer destination registration unit;
a determination unit to determine, when the image information is received, whether the sender of the received image information is registered by said sender registration unit;
a data storage unit that stores the image information that is determined that the sender of the received image information is registered by said sender registration unit;
a transfer destination extraction unit that extracts a transfer destination corresponding to the sender of said image information stored by said data storage unit from said transfer destination registration unit; and
a transfer control unit that starts transferring the image information that is received by said setting time and stored by said data storage unit to the transfer destination extracted by said transfer destination extraction unit at' the setting time corresponding to said transfer destination.

Feature 9. The facsimile apparatus as in feature 8, wherein
said set time storage unit further can store one or more times at which the transfer of the whole image information is started and stores either the set time designated for each transfer destination or the set time for the transfer of the whole image information at a time; and
said transfer control unit starts transferring the image information received and accumulated by said data storage unit by the set time stored in said set time storage unit at the set time corresponding to the transfer destination extracted by said transfer destination extraction unit.

Feature 10, A facsimile apparatus having communication functions including a function to exchange e-mail messages through a network and a function to communicate facsimile data, comprising:
a data storage unit that stores an e-mail message received through said network;
a data conversion unit that converts data contained in the e-mail message stored by said data storage unit into image data for facsimile by a method corresponding to the type of said data;
a determination unit that determines a transfer destination of said data by checking the contents of said data contained in said e-mail message stored by said data storage unit;
a transfer destination registration unit that stores a phone number of a facsimile terminal connected through said analog public network as a transfer destination of said image data for facsimile;
a transfer control unit that transfers said image data for facsimile to a counterpart facsimile terminal registered by said transfer destination registration unit; and
a set time storage unit that stores one or more set times at which a transfer to each transfer destination is started;
wherein said facsimile apparatus converts data contained in said e-mail message accumulated in said data storage unit by said set time into said image data for facsimile and starts transferring said image data for facsimile to a transfer destination stored in said transfer destination registration unit at the set time corresponding to said transfer destination.

Feature 11. The facsimile apparatus as in feature 10, wherein
said facsimile apparatus has RI-FAX function to transmit data in compliance with a protocol for the real-time Internet facsimile function;
said facsimile apparatus further comprises a transfer destination information storage unit that stores identification information including a phone number of a facsimile terminal that can communicate through said analog public network, an IF address or a host name of a terminal provided with said RI-FAX function, and an e-mail address of a terminal that can receive image data through said network as information for identifying a transfer destination of the data and further stores communication procedures and data formats of said facsimile terminals;
said data conversion unit converts data format of the received image information and said data contained in said received e-mail message into data format of transfer destination terminal; and
said transfer control unit starts transferring the converted data to the transfer destination stored in said transfer destination registration unit at the set time corresponding to said transfer destination.

Feature 12. The facsimile apparatus as in feature 11, wherein the data that are transferred includes data received by said R2-FAX function.

Feature 13. The facsimile apparatus as in feature 10, 11 or 12, wherein
said facsimile apparatus further has a function to store data in a hard disk provided on an external computer communicating through said network;
said transfer destination registration unit stores image data to one or more folders in a hard disk of a computer communicating through said network;
said set time storage unit stores information including a time to start the transfer to said folders; and
said transfer control unit starts transferring the received image information, data received by said RI-FAX function, or image information contained in the received e-mail to a given folder in the hard disk connected to said given computer communicable through said network at a set time designating said folder as the transfer destination.

Feature 14. The facsimile apparatus as in feature 10, 11, 12 or 13, further comprising:
a sender storage unit that stores identification information including e-mail addresses, IP addresses of terminals having said RI-FAX function, or terminal identification information of facsimile terminals for said analog public channel for identifying one or more senders so that said senders correspond each item of identification information of transfer destinations stored in said transfer destination registration unit;
a sender identification unit that identifies, when image information or data including an e-mail message is received, identification information of the sender based on the data format of the received data or the classification of the sender terminal;
a sender determination unit that determines whether the identification information of the identified sender is registered by said sender identification unit; and
a transfer destination extraction unit that extracts transfer destinations corresponding to the sender when the sender of the received image information is registered in said sender storage unit;
wherein said set time storage unit stores a time at which the facsimile apparatus starts transferring corresponding to each item of identification information of said senders; and
said transfer control unit converts the transfer data into the data format of destination terminal and starts transferring at the time specified based on the identification information of said senders.

Feature 15. A facsimile apparatus for exchanging image data with a plurality of communication terminals through various networks, comprising:
an interface unit that exchanges said image data with the plurality of communication terminals;
a memory unit that stores therein said image data received from one of said communication terminals and further stores therein identification information of the plurality of communication terminals; and
a control unit that causes said memory unit to store therein said image data received by said interface unit, converts said image data stored in said memory unit by changing the data format of said image data so that another one of said communication terminals can properly handle said image data, and causes said interface unit to transmit the converted image data to the other one of said communication terminals.

Feature 16. The facsimile apparatus as in feature 15, wherein
said interface unit further comprises a LAN interface unit that exchanges a first image data contained in an e-mail message with a first one of said communication terminals through a LAN and a facsimile modem that exchanges second image data with a second one of said communication terminals through an analog public network;
said memory unit stores therein said first image data received from said first one of said communication terminals and further stores therein identification information of said second one of said communication terminals as destination information;
said control unit causes said memory unit to store therein said first image data received by said LAN interface unit, converts said first image data stored in said memory unit by changing the data format of said first image data so that said second one of said communication terminals can properly handle said first image data, and causes said facsimile modem to transmit the converted first image data to said second one of said communication terminals.

Feature 17. The facsimile apparatus as in feature 16, wherein
said LAN interface unit can exchange a third image data with a third one of said communication terminals through the Internet in compliance with Internet facsimile protocol;
said memory unit stores therein identification information indicating said third one of said communication terminals as said destination information and further stores information indicating data format that said third one of said communication terminals can properly handle as data format information so that said information indicating data format corresponds to said identification information; and
said control unit converts said first image data stored in said memory unit by changing the data format of said first image data to data format corresponding to said third one of said communication terminals and causes said LAN interface unit to transmit the converted first image data to said third one of said communication terminals.

Feature 18. The facsimile apparatus as in feature 17, wherein
said control unit causes said memory unit to store therein said third image data received by said LAN interface and transfers said third image data to one of communication terminals of which identification information is stored by said memory unit.

Feature 19. The facsimile apparatus as in feature 16, 17 or 18, wherein
said control unit causes said memory unit to store therein sender identification information indicating one of said communication terminals from which image data are received so that each item of said sender identification information corresponds to said destination identification information and further causes said interface unit to transmit said image data stored in said memory unit to the other one of said communication terminals when said one of said communication terminals is registered by said memory unit as said sender identification information.

Feature 20. The facsimile apparatus as in feature 19, wherein said control unit extracts the domain name of said first one of said communication terminals from said e-mail message, causes said memory unit, if the domain name is registered in said memory unit as a sender, to store therein said first image data, and further causes said interface unit to transmit said first image data stored in said memory unit to another one of said communication terminals corresponding, as a transfer destination, to said first one of said communication terminal.

Feature 21. The facsimile apparatus as in feature 19 or 20, wherein said control unit stores the IP address and the terminal identification information, contained in the packet of said third image data, of said third one of said communication terminals in said memory unit.

Feature 22. The facsimile apparatus as in any one of features 15 to 21, further comprising a clock unit that outputs current time information;
wherein
said memory unit further stores one or more set times, corresponding to the other one of said communication terminals, at which said image data is to be transferred; and
said control unit causes said interface unit to transmit the converted image data to the other one of said communication terminals at the one or more set times based on said current time information output by said clock unit.

Feature 23. A facsimile apparatus, comprising:
an interface unit that receives image data from a plurality of sender terminals and transmits image data to a plurality of destination terminals;
a clock unit that outputs current time information ;
a memory unit that stores therein identification information of the plurality of sender terminals and identification information of the plurality of destination terminals, so that one or more destination terminals correspond to each one of said sender terminals, further stores one or more set times corresponding to each of said destination terminals; and
a control unit, in response to reception of image data from one of terminals, determines whether said one of terminals is included in the plurality of sender terminals of which identification information is stored by said memory unit, and, if said one of terminals is included in the plurality of sender terminals, causes said memory unit to accumulatively store therein said image data received from said one of terminals, identifies identification information of destination terminals, stored in said memory unit, corresponding to said one of terminals, and further causes said interface unit to transmit the accumulated image data to the identified destination terminals corresponding to said one of terminals at the one or more set times based on said current time information output by said clock unit.

Feature 24. The facsimile apparatus as in feature 23, wherein said control unit causes said interface unit to transmit the entire accumulated image data to the identified destination terminals corresponding to said one of terminals at a set time stored in said memory unit, corresponding to each of destination terminals, based on said current time information output by said clock unit.

Feature 25. The facsimile apparatus as in feature 24, wherein said control unit converts said image data received from said one of terminals into image data of which data format the identified destination terminals can properly handle, and causes said interface unit to transmit the accumulated and converted image data to the identified destination terminals corresponding to said one of terminals at the one or more set times based on said current time information output by said clock unit.

Feature 26. The facsimile apparatus as in feature 25, wherein
said interface unit can exchange image data with a facsimile terminal, a real-time Internet facsimile terminal, and a data terminal through an analog public network, the Internet, and a local area network, respectively;
said memory unit stores therein, as identification information, a phone number of said facsimile terminal, an IP address or a host name of said real-time Internet facsimile terminal, and an e-mail address of said data terminal, and further stores therein communication procedures and data formats of said facsimile terminal, said real-time Internet facsimile terminal, and said data terminal; and

said control unit converts the data format of image data stored in said memory unit the data format stored in said memory unit.

Feature 27. The facsimile apparatus as in feature26, wherein said image data that is transferred by said facsimile apparatus includes image data received from said real-time Internet facsimile terminal.

Feature 28. The facsimile apparatus as in feature 25, 26 or 27, wherein
said memory unit stores therein identification information indicating a folder in a hard disk provided on a computer that said interface unit can exchange data via a network and further stores therein a set time at which image data are to be transferred to said folder; and
said control unit causes said interface unit to transmit the received image data, data received from said real-time Internet facsimile terminal, or image data contained in the received e-mail message to said folder at said set time.

Feature 29. A computer program comprising program code means that, when executed on a computer system, instruct the computer system to function as a facsimile apparatus according to any one of the' preceding numbered features.

## Claims

1. A facsimile apparatus (10) comprising:
receiving means for receiving facsimile image data sent to the facsimile apparatus (10) through an analog public network;
a data conversion unit (18) for converting a format of received facsimile image data sent to the facsimile apparatus (10) through the analog public network into another format suitable for transmission through the internet;
a transfer destination registration unit for registering therein information on a transfer destination to be transferred to through the internet as the transfer destination of said facsimile image data; and
a transfer control unit (11) for transferring the facsimile image data converted by said data conversion unit (18) to the transfer destination registered in said transfer destination registration unit via the internet.

2. A facsimile apparatus (10) according to claim 1, further comprising:
a setting time storage unit configured to store one or more setting times, wherein:
said transfer control unit (11) is configured to select a setting time from said setting time storage unit on the basis of the transfer destination registered in said transfer destination registration unit, and start said transmission of said facsimile image data to said registered transfer destination at the selected setting time.

3. A facsimile apparatus (10) according to claim 1, further comprising:
a setting time storage unit configured to store one or more setting times; and
sender information obtaining means for obtaining sender information identifying the sender of the data received by said receiving means, wherein:
said transfer control unit (11) is configured to select a setting time from said setting time storage unit on the basis of the obtained sender information, and start said transmission of said facsimile image data to the transfer destination registered in said transfer destination registration unit at the selected setting time.

4. A facsimile apparatus (10) according to claim 3, wherein:
said transfer control unit (11) is configured to select a setting time from said setting time storage unit on the basis of both the obtained sender information and said registered transfer destination, and start said transmission of said facsimile image data to said registered transfer destination at the selected setting time.

5. A method comprising:
receiving facsimile image data through an analog public network;
converting a format of facsimile image data received through the analog public network into another formats suitable for transmission through the internet;
registering information on a transfer destination to be transferred to through the internet as the transfer destination of said facsimile image data; and
transferring the facsimile image data converted in said converting step to the transfer destination registered in said registering step via the internet.

6. A method according to claim 5, further comprising:
storing one or more setting times; and
selecting one of the stored setting times on the basis of the transfer destination registered in said registering step, and starting said transmission of said facsimile image data to said registered transfer destination at the selected setting time.

7. A method according to claim 5, further comprising:
storing one or more setting times;
obtaining sender information identifying the sender of the data received in said receiving step; and
selecting one of the stored setting times on the basis of the obtained sender information, and starting said transmission of said facsimile image data to the transfer destination registered in said registering step at the selected setting time.

8. A method according to claim 7, wherein, in said selecting step, the setting time is selected on the basis of both the obtained sender information and said registered transfer destination.
